# EUROPEAN PATENT APPLICATION

(11) **EP 2 554 963 A2**
(43) Date of publication of application: **06.02.2013**
(21) Application number: 12000772.9
(22) Date of filing: 06.02.2012
(51) Int. Cl.: G01L 1/24

(54) **Strain inspection apparatus for transparent materials**

(30) Priority: 02.08.2011 JP 2011004523
(71) Applicant: Luceo Co., Ltd., Itabashi-ku Tokyo 173-0024 (JP)
(72) Inventor: Honda, Umehiko, Tokyo 173-0024 (JP); Hanashima, Masakazu, Tokyo 173-0024 (JP); Takamiya, Masahide, Tokyo 173-0024 (JP)
(74) Representative: Leinweber & Zimmermann

(57) **Abstract**

A strain inspection apparatus (1) for inspecting strain in an object includes a first polarizing plate (7); a second polarizing plate (8) opposing to the first polarizing plate (7) with a predetermined distance being provided therebetween, the second polarizing plate (8) forming on one surface thereof at the side of the first polarizing plate a test surface on which an object to be inspected is placed; a diffusion plate (9) arranged at the other surface of the second polarizing plate (8); an illumination device (10) for irradiating light on the diffusion plate (9) from a side opposite to the side where the second polarizing plate (8) is arranged; a holder (11) for accommodating therein the illumination device (10); and a light source (12) arranged at a bottom surface of the holder (11). The light source (12) is constituted by an LED; and the illumination device constitutes a surface illumination device which is adapted to produce uniform light from light emitted by the LED. The illumination device (10) includes a reflection plate having a plurality of small holes (14) therein.

## Description

### TECHNICAL FIELD

The present invention relates to an optical measuring apparatus and, more particularly, to a strain inspection apparatus or instrument which detects a strain in a transparent object caused by an external stress acting to the object or an internal stress residing in the object, using the photoelastic phenomena occurring at the time when light passes through the object to be inspected.

### BACKGROUND OF THE INVENTION

In general, products such as glass products and plastic products including acrylic resin usually have strain therein caused by unevenness of heat distribution when they are produced or processed. This strain may be a factor of deterioration of mechanical strength or self-collapse of the products. For the sake of quality management or safety requirements of the products, at the timing when the products are produced or shipped, it is necessary to perform the quality check or product management wherein the magnitude of residual strain in the products is examined based on the standard and the products exceeding the predetermined standard are excluded from final products.

In the case where the glass products or the plastic products such as acrylic products are transparent or translucent, the method to which photoelastic phenomena, one of the optical characteristics, is applied is widely used to visually detect strain in such products. Where an external stress is acting to an object or an internal stress exists in the object, there occurs double refraction phenomenon at the stressed portions when light passes through the object. The above method makes it possible to detect the condition of external stress applied to the object or the condition of internal stress residing in the object according to the strength or weakness of the double refraction phenomenon or the distribution thereof.

As a more particular example, the crossed-Nicol method is known in the art. In this method, the object to be inspected is positioned between two polarizing plates arranged in parallel whose polarizing axes are displaced by 90 degrees with each other. Light is irradiated to the first polarizing plate from its outside to inside and light which has passed through the object is observed from outside of the second polarizing plate. If there is no strain in the inspected object, the plane or linearly polarized light having passed through the first polarizing plate passes through the object as it is and then reaches the second polarizing plate. As the second polarizing plate is arranged such that its polarizing axis is displaced by 90 degrees with respect to that of the first polarizing plate, the light having passed through the object is interrupted by the second polarizing plate. As a result, when the light is observed outside of the second polarizing plate, it looks black because the light from the object is entirely blocked by the second polarizing plate.

On the contrary to the above, if there exists stress in the object to be inspected, the plane polarized light having passed through the first polarizing plate is double-refracted at the portion where the stress exists. In other words, the photoelastic phenomenon occurs there. As a result, light corresponding to the magnitude of the stress, that is, fringe patterns (for example, curved-line patterns or stripped-line patterns) are visually observed from the outside of the second polarizing plate.

Conventionally, as a light source for irradiating the first polarizing plate, a fluorescent lamp or a filament lamp has been used, which has diffusion characteristics. In the case where such fluorescent or filament lamp is used, there occur differences of color or intensity due to characteristics of light source and they may be a factor of errors in inspecting the strain. For the purpose of achieving the plain uniformity of irradiating light, the distance between the light source and the diffusion plate on which light from the light source incident first was inevitably kept long to some extent, this making it difficult to constitute the whole light source unit compact.

Further, as the fluorescent lamp or filament lamp itself emits fairly large amount of heat, in the case where such light is used as a light source, it was necessary to keep a large amount of space and/or to provide a separate cooling fan inside the device so as to avoid mechanical distortion of the polarizing plate itself caused by the heat emitted by the light source. This was conventionally a bar to make the whole apparatus compact, lightweight and simple.

To overcome the foregoing defects in the conventional ones, it has been attempted to adopt an LED as a light source, which can emit a large amount of light even though it is small in size and which emits a smaller amount of heat as compared to the fluorescent lamp or filament lamp. However, as LED has characteristics of a strong directivity of irradiating light, it was difficult to obtain uniform irradiating light over a wide area which is necessary to inspect the object having a predetermined size even if only the fluorescent lamp or filament lamp is simply replaced with the LED.

Such technique that light emitted from the light source having strong directivity irradiates uniformly a large amount of area has been known in the prior art (Japanese Unexamined Patent Application Publication No. 2008-27886).

### SUMMARY OF THE INVENTION

It is, therefore, an object of the present invention to overcome the defects in the conventional apparatus and to provide a strain inspection apparatus for inspecting strain in an object such as a glass product, in which an LED is adopted as a light source and an illumination device for uniformly illuminating over a wide area is installed.

According to one aspect of the present invention, the strain inspection apparatus for inspecting strain in a transparent object, caused by an external stress acting on the object and an internal stress residing in the object, includes: a first polarizing plate; a second polarizing plate opposing to the first polarizing plate with a predetermined distance being provided therebetween, the second polarizing plate forming on one surface thereof at the side of the first polarizing plate a test surface on which an object to be inspected is placed; a diffusion plate arranged at the other surface of the second polarizing plate; an illumination device for irradiating light on the diffusion plate from a side opposite to the side where the second polarizing plate is arranged; a holder for accommodating therein the illumination device; and a light source arranged at a bottom surface of the holder, **characterized in that** the light source is constituted by an LED, and the illumination device constitutes a surface illumination device which is adapted to produce uniform light from light emitted by the LED.

With the strain inspection apparatus according to one aspect of the invention, there is provided a simple, compact and lightweight strain inspection apparatus.

The above features and advantages and other features and advantages of the present invention will be readily understood from the following detailed description of the preferred embodiments of the invention when taken in connection with the accompanying drawings.

### BRIEF DESCRIPTION OF THE DRAWINGS

Fig. 1 is a diagrammatic perspective view of one embodiment of the strain inspection apparatus of the present invention.

Fig. 2 is an exploded view showing an analyzer and a polarizer of the apparatus of the present invention.

Fig. 3 is a sectional view showing a surface illumination device and a holder of the apparatus of the present invention.

### DESCRIPTION OF THE PREFERRED EMBODIDMENTS

Hereinafter, an embodiment of a strain inspection apparatus according to the present invention will be explained with reference to the accompanying drawings.

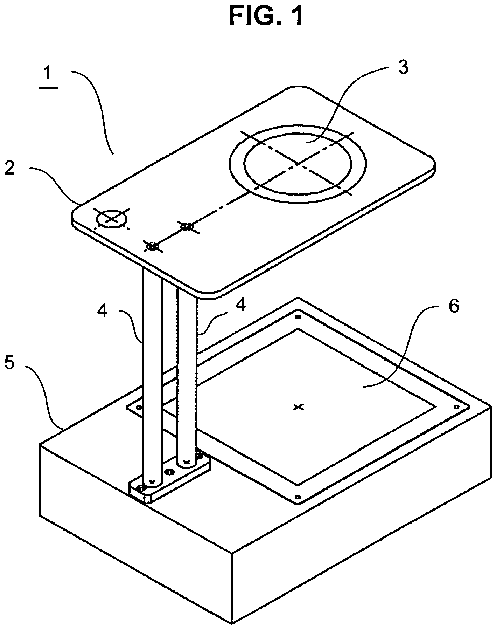

Fig. 1 is a perspective view of a strain inspection apparatus according to the present invention. As shown therein, the strain inspection apparatus 1 is constituted by a rectangular shaped plate member 2, an analyzer 3 which is embedded in the plate member 2, two vertical supporting rods 4 which support the plate member 2, a main body 5 which supports the vertical rods 4, and a polarizer 6 which is housed in the main body 5.

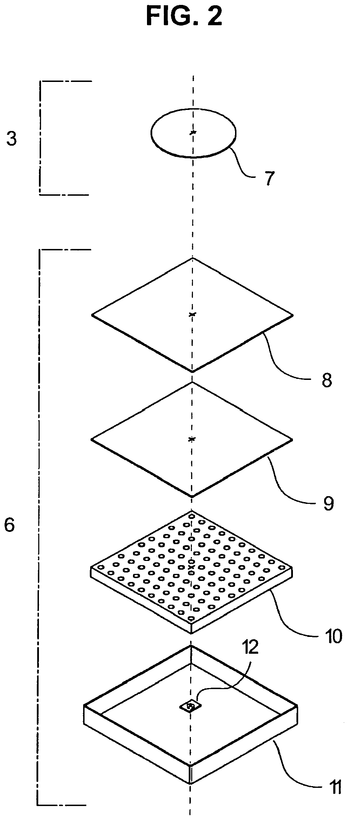

Fig. 2 is an exploded view which shows the analyzer 3 and the polarizer 6. As shown in Fig. 2, the analyzer 3 is constituted by a first polarizing plate 7 of a disc-shape. The polarizer 6 is constituted by a second polarizing plate 8 which opposes to the first polarizing plate 7 with an object to be tested (not shown) positioned therebetween, a diffusion plate 9 displaced under the second polarizing plate 8, a surface illumination device 10 arranged under the diffusion plate 9, a holder 11 which houses therein the surface illumination device 10, and an LED diode 12 arranged at the central portion of the bottom surface of the holder 11.

The above explained respective members constituting the analyzer 3 and polarizer 6 are aligned on the same axis (analyzing axis) as shown in Fig. 2. It should be noted that there is no limitation in the distance between the first polarizing plate 7 and the second polarizing plate 8. The distance may be changed depending on the factor such as dimension of the object to be inspected. Importance is that the polarizing axis of the first polarizing plate 7 is displaced by 90 degrees with respect to that of the second polarizing plate 8.

Now, explained are the details of the surface illumination device 10 which is a featured component of the apparatus according to the invention.

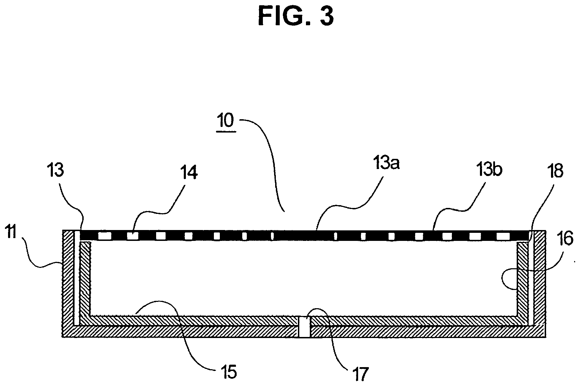

Fig. 3 is a sectional view which illustrates a state in which the surface illumination device 10 is accommodated in the holder 11 of the strain inspection apparatus of the invention. As illustrated in Fig. 3, the surface illustration device 10 has a casing 18 which is housed in the holder 11. The casing 18 comprises reflection sidewall surfaces 16 at its sidewalls, and a reflection bottom surface 15 at its bottom. At the center of the reflection bottom surface 15, there is provided an opening 17 for an LED 12. The reflection sidewall surfaces 16 and the reflection bottom surface 15 allow reflection and diffusing-reflection of light. The upper opening of the housing 18 is covered by a light emission-side reflection plate 13 which allows penetration, reflection and diffusing-reflection of light. The light emission-side reflection plate 13 is constituted by a central reflection part 13a having a predetermined area right above the opening 17 for the LED 12 and an outer reflection part 13b which surrounds the central reflection part 13a. The outside reflection part 13b is formed by the reflection material which has a predetermined reflectance and allows penetration, reflection and diffusing reflection of a part of light, while the central reflection part 13a is formed by the reflection material of light permeability which has higher reflectance than that of the outside reflection part 13b.

The reflection bottom surface 15, the reflection sidewall surfaces 16 and the light emission-side reflection plate 13 are made of materials having low light absorption characteristics. The light emitted from the LED 12 is multi-reflected by the reflection bottom surface 15 at the bottom and the reflection sidewall surfaces 16 at the sides of the casing 18 without being absorbed by the respective reflection members. As a result, the above construction makes it possible to utilize substantially full amount of light emitted from the LED 12.

As explained hereinabove, according to the surface illumination device 10, some amount of the light emitted from the LED 12 having strong directivity penetrates the central reflection part 13a and the remaining thereof is reflected by the same central reflection part 13a. The light reflected by the central reflection part 13a penetrates the outer reflection part 13b after it is multi-reflected by the reflection bottom surface 15, the reflection sidewall surfaces 16 and the outer reflection part 13b. In this way, the amount of light penetration at the central portion where intensity of light is high is limited while the amount of light penetration at the portion other than the central portion increases progressively so that the evenness of illumination light can be achieved. Further, the light emitted from the LED 12 is multi-reflected inside the casing 18, the vertical dimension of the device can be made small as compared to the conventional one, thereby making it possible to construct the overall device compact.

Here, the outer reflection part 13b is provided with a plurality of fine or small holes 14 such as circle-, oblique- or square-holes in such a manner that the dimension of openings becomes progressively large in the outward direction as shown in Fig. 3. So constituting as above, the amount of penetration light can be increased in accordance with increase in distance from the central portion to the outer portion, whereby the evenness of illumination light can be attained. Opening areas of the small holes 14 in the outer reflection part 13b may be same. In this case, the number of holes 14 arranged at the outer periphery of the outer reflection part 13b is larger than that arranged near the central reflection part 13a.

The materials forming the respective components such as the central reflection part 13a are not limitative and can be selected according to the desire. For example, as the central reflection part 13a, an optical reflective plate well known in the art can be used, or alternatively, a plate on which reflection material is sputtered may be used. An optical diffusion plate such as a frosted glass may be used as the light emission-side reflection plate 13.

As the surface illumination device 10, the device disclosed in Japanese Patent No. 4280283, namely, Product Name "Flatter" (commercially available from Opto-Design Inc., in Tokyo Japan) can be used.

In the above, one preferred embodiment according to the invention has been explained, the invention is not limitative to the above embodiment and, it is needless to say that various modifications can be made without departing from the spirit of the invention.

For example, although one LED is used as the light source in the above explained embodiment, the number of LEDs is not limited to only one and a plurality of LEDs may be assembled as a unit so as to obtain a larger amount of light.

The LED may consist of red, green and blue light emitting elements of three primary colors.

The LED may be constituted by surface mounting type diode.

Furthermore, although the LED is positioned at the bottom center of the holder 11 in the above explained embodiment, the LED or LEDs may be arranged at any given position at the bottom surface of the holder 11 according to the design choice as far as desired even illumination of light can be obtained by such modification of reflectance of the respective elements in the illumination device.

## Claims

1. A strain inspection apparatus (1) for inspecting strain in a transparent object, caused by an external stress acting on the object and an internal stress residing in the object, said apparatus including:
a first polarizing plate (7);
a second polarizing plate (8) opposing to said first polarizing plate (7) with a predetermined distance being provided therebetween, said second polarizing plate (8) forming on one surface thereof at the side of said first polarizing plate a test surface on which an object to be inspected is placed;
a diffusion plate (9) arranged at the other surface of said second polarizing plate (8);
an illumination device (10) for irradiating light on said diffusion plate (9) from a side opposite to the side where said second polarizing plate (8) is arranged;
a holder (11) for accommodating therein said illumination device (10); and
a light source (12) arranged at a bottom surface of said holder (11),
**characterized in that**:
said light source (12) is constituted by an LED, and
said illumination device (10) constitutes a surface illumination device which is adapted to produce uniform light from light emitted by said LED.

2. A strain inspection apparatus (1) according to claim 1, in which said illumination device (10) includes a light emission-side reflection plate (13) and a casing (18) covered by said light emission-side reflection plate (13), said light emission-side reflection plate (13) having a central reflection part (13a) right above said light source (12) and an outer reflection part (13b) surrounding said central reflection part (13a) and having a plurality of small holes therein, said casing (18) including a reflection bottom surface (15) at the center of which said LED (12) is arranged and reflection sidewall surfaces (16).

3. A strain inspection apparatus (1) according to claim 2, in which said plurality of small holes in said outer reflection part (13b) have different opening areas in such a manner that opening area becomes progressively large in an outward direction from said central reflection part (13a).

4. A strain inspection apparatus (1) according to claim 2, in which said plurality of small holes in said outer reflection part (13b) have same opening area and a greater number of said holes are arranged at an outer periphery of said outer reflection part (13b) and a smaller number of said holes are arranged around said central reflection part (13a).

5. A strain inspection apparatus (1) according to claim 1, in which said LED is constituted by a single diode or an assembly of a plurality of diodes.

6. A strain inspection apparatus (1) according to claim 1, in which said LED is constituted by a red, a green and a blue light emitting element.

7. A strain inspection apparatus (1) according to claim 1, in which said LED is a surface mounting type diode.
